# EUROPÄISCHE PATENTANMELDUNG

(11) **EP 4 047 765 A1**
(43) Veröffentlichungstag der Anmeldung: **24.08.2022**
(21) Anmeldenummer: 22155285.4
(22) Anmeldetag: 04.02.2022
(51) Int. Cl.: H02G 3/08, G02B 6/44, H02G 3/14, H05K 5/02, H02G 3/16

(54) **WANDVERTEILERGEHÄUSE**

(30) Priorität: 18.02.2021 DE 102021103880
(71) Anmelder: METZ CONNECT TECH GmbH, 78176 Blumberg (DE)
(72) Erfinder: Müller, Martin, 78176 Blumberg (DE); Zschocke, Heiko, 78176 Blumberg (DE)
(74) Vertreter: Westphal, Mussgnug & Partner Patentanwälte mbB

(57) **Zusammenfassung**

Die Erfindung betrifft ein Wandverteilergehäuse (10) mit einem Bodenteil (20), welches wenigstens eine erste Kammer (21) insbesondere für Installationsanschlüsse und eine durch Einführöffnungen (23a) aufweisende Trennwand (23) von der ersten Kammer (21) getrennte zweite Kammer (22) insbesondere zum Einsetzen von Anschlusselementen aufweist, wobei ein erster Deckel (30) zumindest die erste Kammer (21) und ein zweiter Deckel (40) zumindest die zweite Kammer (22) überdeckt, wobei der erste Deckel (30) mittels eines ersten Schlosses (31) abschließbar ausgebildet ist, wobei das erste Schloss (31) in einer in dem Bodenteil (20) angeordneten Teilkammer (24) angeordnet ist.

## Beschreibung

Die Erfindung betrifft ein Wandverteilergehäuse gemäß dem Oberbegriff des Patentanspruchs 1.

Bekannt sind Wandverteilergehäuse mit einem Bodenteil, welches wenigstens eine erste Kammer insbesondere für Installationsanschlüsse und eine durch Einführöffnungen aufweisende Trennwand von der ersten Kammer getrennte zweite Kammer insbesondere zum Einsetzen von Anschlusselementen aufweist. Derartige Wandverteilergehäuse kommen dort zur Anwendung, wo einerseits fest installierte Anschlüsse vorhanden sein sollen, die beispielsweise durch einen Installateur angebracht werden, und andererseits durch einen Benutzer flexible Anschlusselemente an den fest installierten Anschlüssen befestigt werden sollen. Bekannt ist bei derartigen Wandverteilergehäusen, dass ein erster Deckel zumindest die erste Kammer und ein zweiter Deckel zumindest die zweite Kammer überdeckt, wobei der erste Deckel mittels eines ersten Schlosses abschließbar ausgebildet ist. Dadurch wird es ermöglicht, dass der Installateur die Installationsanschlüsse anbringt und danach den ersten Deckel verschließt, so dass der Benutzer keine Möglichkeit hat, eigenständig die Installationsanschlüsse zu verändern. Der Benutzer hat jedoch die Möglichkeit, in der zweiten Kammer Anschlusselemente anzuschließen und anschließend den zweiten Deckel zu schließen, so dass die Anschlusselemente verdeckt und geschützt sind. Bei bekannten Wandverteilergehäusen überdeckt der zweite Deckel den ersten Deckel vollständig.

Die Aufgabe der Erfindung besteht darin, ein bekanntes Wandverteilergehäuse weiterzubilden, insbesondere derart, dass es robust gegen äußere Einflüsse ist und in unterschiedlichen Umgebungen einsetzbar ist.

Die Aufgabe wird erfindungsgemäß gelöst durch ein Wandverteilergehäuse mit den Merkmalen des Patentanspruchs 1.

Vorteilhafte Ausgestaltungen und Weiterbildungen der Erfindung sind in den abhängigen Ansprüchen angegeben.

Das erfindungsgemäße Wandverteilergehäuse mit einem Bodenteil, welches wenigstens eine erste Kammer insbesondere für Installationsanschlüsse und eine durch Einführöffnungen aufweisende Trennwand von der ersten Kammer getrennte zweite Kammer insbesondere zum Einsetzen von Anschlusselementen aufweist, wobei ein erster Deckel zumindest die erste Kammer und ein zweiter Deckel zumindest die zweite Kammer überdeckt, wobei der erste Deckel mittels eines ersten Schlosses abschließbar ausgebildet ist, zeichnet sich dadurch aus, dass das erste Schloss in einer in dem Bodenteil angeordneten Teilkammer angeordnet ist. Durch eine derartige Anordnung in einer separaten Teilkammer kann der Innenraum der ersten und/oder zweiten Kammer besser gegen Staub und Schmutz geschützt werden, ohne dass besondere Anforderungen an das Schloss zu stellen wären. Insbesondere besteht die Möglichkeit, die erste und/oder zweite Kammer gemäß der Schutzart IP65 auszubilden, ohne dass ein Schloss, dass die Anforderungen der IP65 zu erfüllen hätte, verwendet werden müsste. Zusätzlich ist das Schloss durch eine derartige Anordnung besser gegen Zugriffe geschützt.

Vorzugsweise sind bei geschlossenem erstem Deckel und geschlossenem zweiten Deckel die erste und/oder zweite Kammer abgedichtet, insbesondere gegen die Teilkammer. Dadurch kann ein Eindringen von Staub und Schmutz besser vermieden werden.

Gemäß einer vorteilhaften Weiterbildung der Erfindung ist der zweite Deckel mittels eines Rastverschlusses in einem geschlossenen Zustand fixiert. Dadurch kann der zweite Deckel im geschlossenen Zustand auf einfache Art und Weise fixiert werden.

Eine vorteilhafte Ausgestaltung der Erfindung sieht vor, dass der zweite Deckel mittels eines zweiten Schlosses abschließbar ausgebildet ist, wobei das zweite Schloss vorzugsweise in der Teilkammer angeordnet ist. Durch eine derartige Ausgestaltung kann die Sicherheit des Wandverteilergehäuses erhöht werden.

Gemäß einer besonders bevorzugten Ausführungsform der Erfindung weisen der erste Deckel einen ersten Abschnitt und der zweite Deckel einen zweiten Abschnitt auf, wobei das erste Schloss in dem ersten Abschnitt zugänglich angeordnet ist, wobei bei geschlossenem ersten Deckel und geschlossenem zweiten Deckel der zweite Abschnitt den ersten Abschnitt überdeckt. Dadurch kann das Schloss zusätzlich geschützt werden.

Vorzugsweise weist der erste Abschnitt eine Fläche auf, welche kleiner ist als die Fläche des ersten Deckels. Dies hat zur Folge, dass die beiden Deckel lediglich abschnittsweise und nicht vollständig überlappen, wodurch Material eingespart werden kann.

Eine vorteilhafte Weiterbildung der Erfindung sieht vor, dass der erste Abschnitt des ersten Deckels gegenüber dem verbleibenden Abschnitt des ersten Deckels abgestuft mit einer geringeren Höhe und der zweite Abschnitt des zweiten Deckels gegenüber dem verbleibenden Abschnitt des zweiten Deckels abgestuft mit einer geringeren Höhe ausgebildet ist. Eine derartige Ausgestaltung der beiden Deckel ermöglicht bei überlappender Anordnung der beiden Abschnitte trotzdem eine ebene Oberfläche des Wandverteilergehäuses.

Vorteilhafterweise sind der erste Deckel und/oder der zweite Deckel schwenkbar an dem Bodenteil angeordnet. Dies kann eine einfache Handhabung ermöglichen.

Eine vorteilhafte Ausgestaltung der Erfindung sieht vor, dass der erste Deckel und/oder der zweite Deckel lösbar an dem Bodenteil angeordnet sind. Eine derartige Ausgestaltung kann ein Austauschen eines beschädigten Deckels erlauben.

Gemäß einer besonders bevorzugten Ausgestaltung der Erfindung sind der erste Deckel und/oder der zweite Deckel mittels wenigstens einer Verbindungsvorrichtung an dem Bodenteil angeordnet, welche einen Quersteg umfasst, der in zwei beabstandet zueinander angeordneten Halbschalen rastend und um die eigene Längsachse drehbar gelagert angeordnet ist. Derartige Verbindungsvorrichtungen können einfach und kostengünstig gefertigt werden. Es können dabei entweder der Quersteg an dem Bodenteil und die Halbschalen an dem ersten bzw. zweiten Deckel oder der Quersteg an dem ersten bzw. zweiten Deckel und die Halbschalen an dem Bodenteil angeordnet sein. Jeder Deckel kann vorzugsweise mittels mehrerer derartiger Verbindungsvorrichtungen an dem Bodenteil angeordnet sein.

Gemäß einer bevorzugten Ausführungsform der Erfindung weist der erste Deckel im Bereich einer Ecke ein zusätzliches Feststellelement zum Verschließen des ersten Deckels auf. Dadurch kann ein Aufklaffen oder Aufklappen des ersten Deckels an dieser Ecke vermieden werden.

Vorzugsweise können der erste Deckel eine erste Durchgangsöffnung und das Bodenteil eine zweite Durchgangsöffnung zum Anbringen einer Verplombung aufweisen, um eine zusätzliche Sicherung gegen unbefugtes Öffnen vorsehen zu können. Vorzugsweise sind in einer Seitenwandung der zweiten Kammer Kabeldurchführungsöffnungen angeordnet, welche insbesondere mit einer Dichtung, vorzugsweise mit Moosgummi, abgedichtet sind. Derartige Abdichtungen verringern das Eindringen von Staub oder Schmutz.

Vorteilhafterweise weist der erste Deckel und/oder der zweite Deckel eine Anlagekante zur Anlage eines Beschriftungselements auf. Eine derartige Anlagekante vereinfacht das Anbringen eines Beschriftungselements.

Gemäß einer besonders bevorzugten Ausführungsform der Erfindung ist das Wandverteilergehäuse als Spleißgehäuse zum Anschluss von Glasfaserkabeln oder Lichtwellenleitern ausgebildet, wobei die erste Kammer als Spleißbereich und die zweite Kammer als Patchbereich ausgebildet ist. Insbesondere bei derartigen Spleißgehäusen ist es von Vorteil, wenn der Installationsbereich von dem Anwenderbereich getrennt ist und zudem der Installationsbereich nicht für jeden Benutzer frei zugänglich ist.

Ein Ausführungsbeispiel der Erfindung wird anhand der nachfolgenden Figuren ausführlich erläutert. Es zeigen
- Fig. 1: eine perspektivische Ansicht eines ersten Ausführungsbeispiels eines erfindungsgemäßen Wandverteilergehäuses,
- Fig. 2: eine Draufsicht auf das Wandverteilergehäuse gemäß Fig. 1 mit ausgeblendetem zweitem Deckel,
- Fig. 3: eine perspektivische Ansicht des Bodenteils des Wandverteilergehäuses gemäß Fig. 1,
- Fig. 4: eine Draufsicht auf das Bodenteil gemäß Fig. 3 mit eingeblendeten Schlössern,
- Fig. 5: eine perspektivische Detailansicht der Schlösser gemäß Fig. 4,
- Fig. 6: eine vergrößerte Ansicht des Rastverschlusses des zweiten Deckels,
- Fig. 7a: einen Längsschnitt durch den Rastverschluss des zweiten Deckels gemäß Fig. 6,
- Fig. 7b: einen Längsschnitt durch den ersten Deckel mit eingeblendetem ersten Schloss,
- Fig. 8: eine vergrößerte Ansicht eines Teils der Verbindungsvorrichtung zwischen dem ersten oder zweiten Deckel und dem Bodenteil des Wandverteilergehäuses gemäß Fig. 1,
- Fig. 9: eine Draufsicht auf ein zweites Ausführungsbeispiel eines erfindungsgemäßen Wandverteilergehäuses,
- Fig. 10: eine perspektivische Ansicht des Wandverteilergehäuses gemäß Fig. 9 mit geöffnetem zweitem Deckel und
- Fig. 11: eine perspektivische Ansicht des Wandverteilergehäuses gemäß Fig. 9 mit geöffnetem erstem und geöffnetem zweitem Deckel.

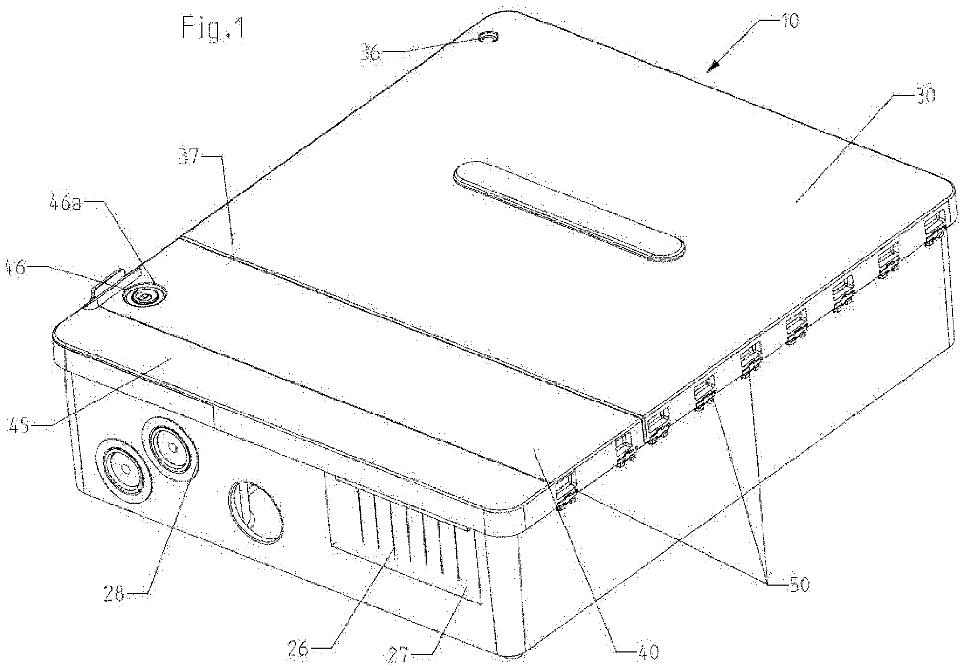

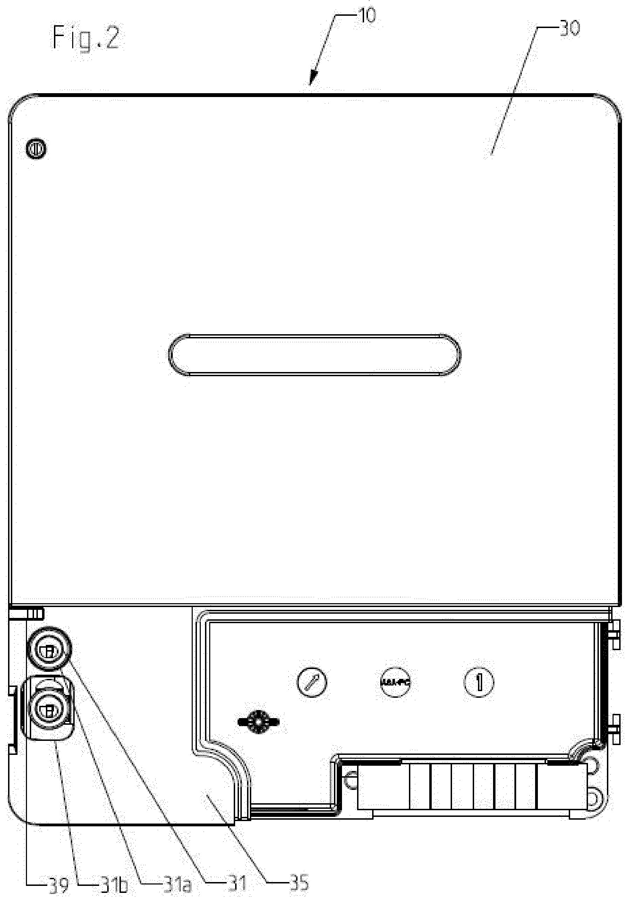

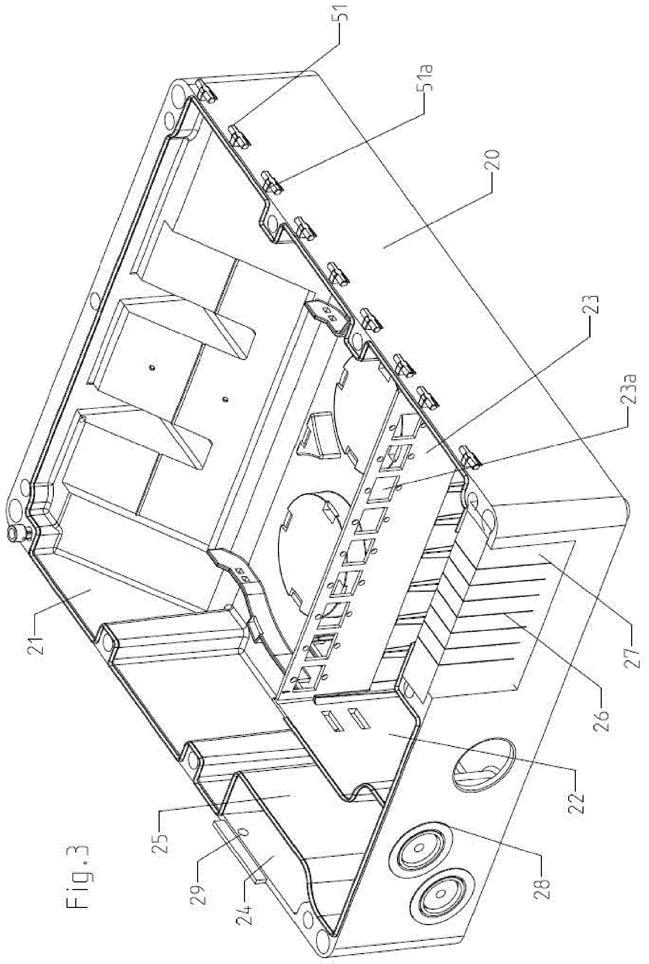

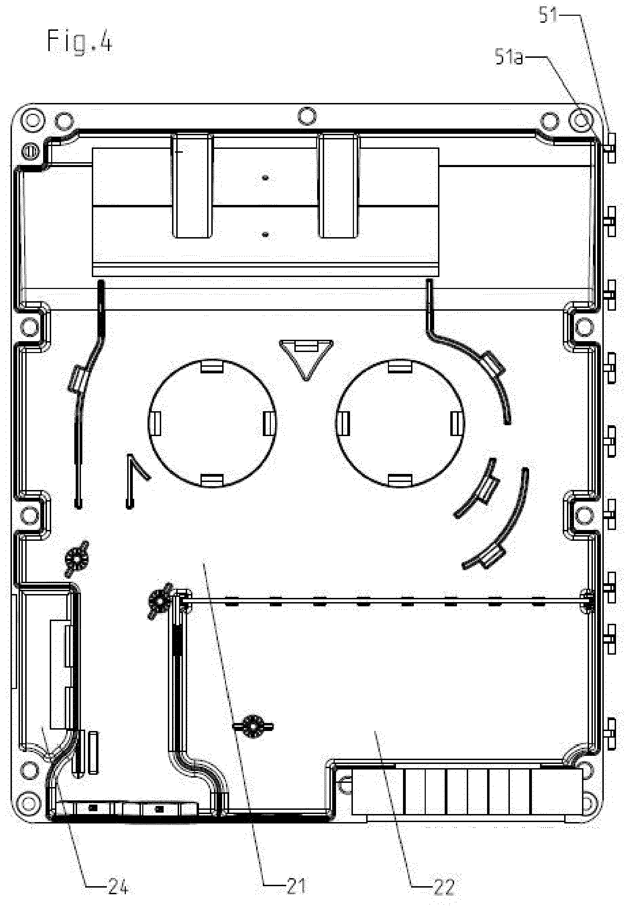

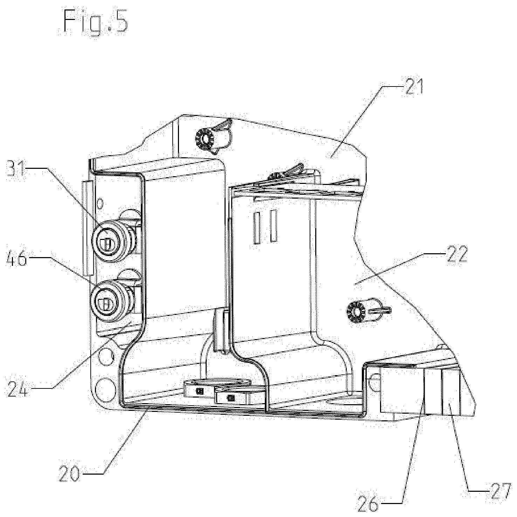

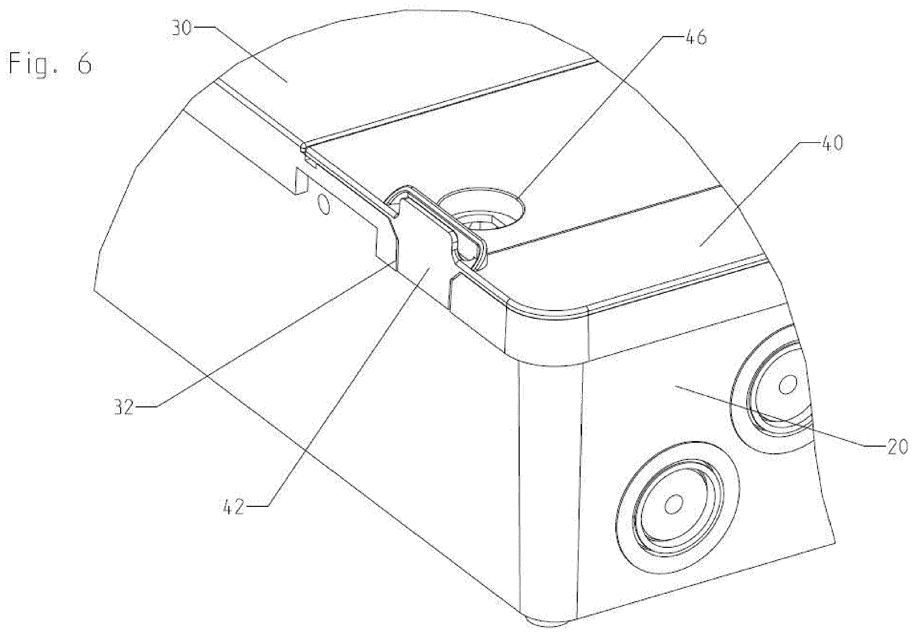

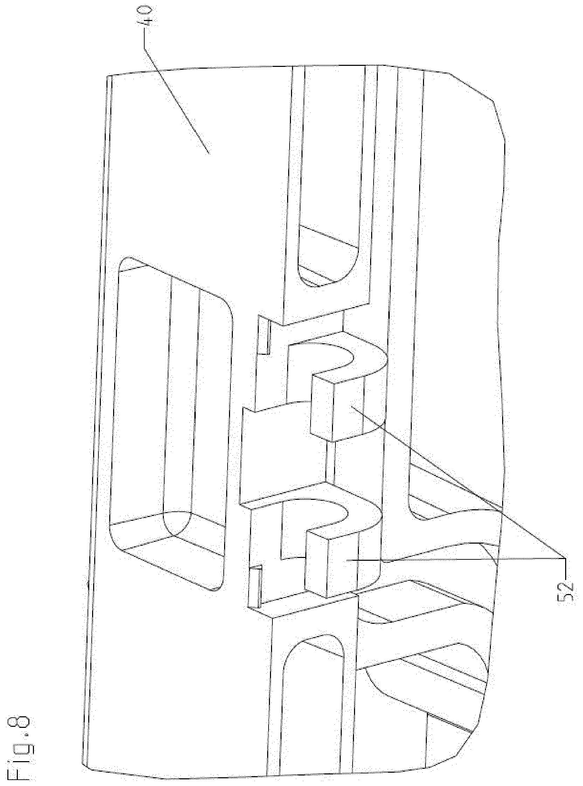

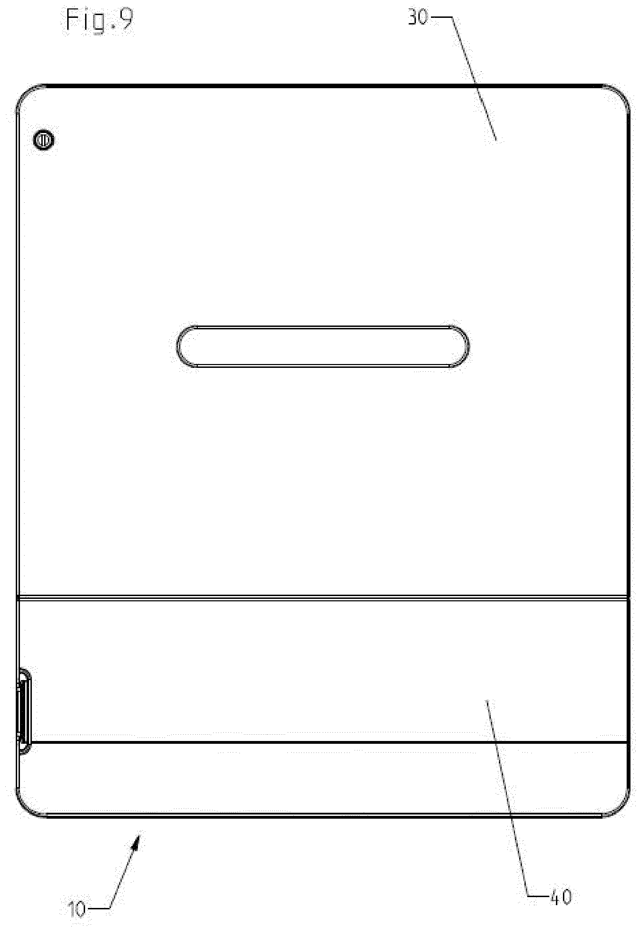

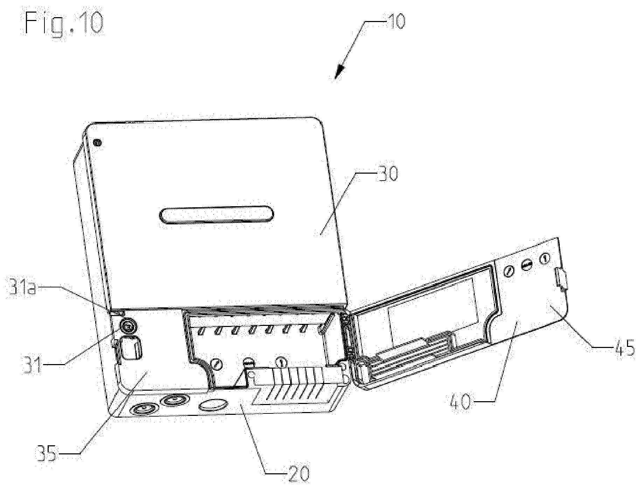

Die Figuren 1 bis 8 zeigen verschiedene Ansichten eines ersten Ausführungsbeispiels eines erfindungsmäßen Wandverteilergehäuses 10, die Figuren 9 bis 11 zeigen drei Ansichten eines zweiten Ausführungsbeispiels des erfindungsgemäßen Wandverteilergehäuses 10. Die nachfolgende Beschreibung bezieht sich soweit nicht explizit erwähnt auf beide Ausführungsbeispiele. In den Figuren sind gleiche oder funktionsgleiche Teile mit gleichen Bezugsziffern bezeichnet, wobei zur besseren Übersicht nicht sämtliche Bezugsziffern in sämtlichen Figuren angegeben sind.

Das Wandverteilergehäuse 10 weist ein Bodenteil 20 auf, welches insbesondere als wannen- oder topfartiges Bodenteil 20 ausgebildet ist. Das Bodenteil 20 weist wenigstens eine erste Kammer 21 und eine durch Einführöffnungen 23a aufweisende Trennwand 23 von der ersten Kammer 21 getrennte zweite Kammer 22 auf, wobei ein erster Deckel 30 zumindest die erste Kammer 21 und ein zweiter Deckel 40 zumindest die zweite Kammer 22 überdeckt.

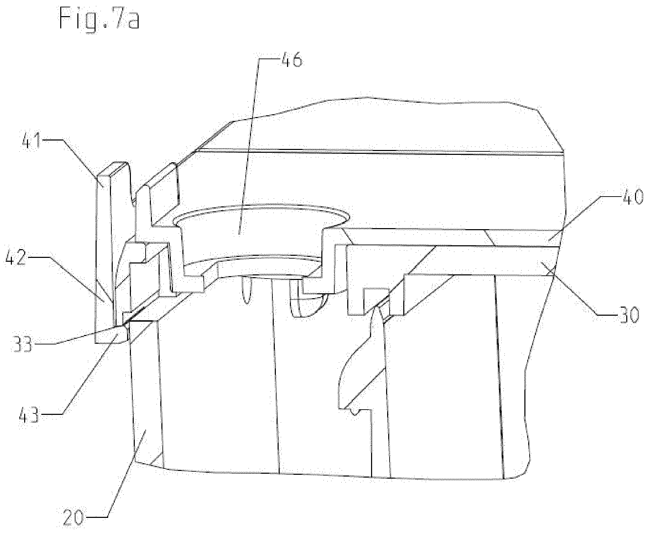

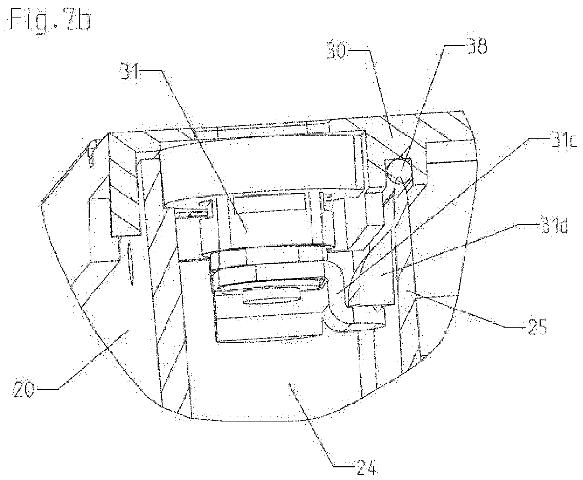

Der erste Deckel 30 ist mittels eines ersten Schlosses 31 abschließbar ausgebildet, wobei das erste Schloss 31 in einer in dem Bodenteil 20 angeordneten Teilkammer 24 angeordnet ist. Die Teilkammer 24 wird insbesondere ebenfalls von dem ersten Deckel 30 überdeckt. Das erste Schloss 31 kann an dem ersten Deckel 30 fixiert sein und lediglich bei geschlossenem Deckel 30 in der Teilkammer 24 angeordnet sein. Alternativ kann das erste Schloss 31 auch in der Teilkammer 24 fixiert angeordnet sein. Das erste Schloss 31 ist durch eine Öffnung 31a im ersten Deckel 30 zugänglich, um das erste Schloss 31 beispielsweise mittels eines Schlüssels betätigen zu können. Das erste Schloss 31 kann beispielsweise einen um eine Drehachse verschwenkbaren Riegel 31c umfassen, der in einer ersten Position ein Verschlusselement 31d hintergreift und den ersten Deckel 30 in dem geschlossenen Zustand fixiert (vgl- Fig. 7b) und der in einer zweiten Position ein Öffnen des ersten Deckels 30 gegen das Bodenteil 20 erlaubt.

Der erste Deckel 30 kann eine erste Durchgangsöffnung 39 und das Bodenteil 20 eine zweite Durchgangsöffnung 29 aufweisen, durch welche eine Verplombung angebracht werden kann.

Die Teilkammer 24 ist durch eine Trennwand 25 von der ersten Kammer 21 und/oder der zweiten Kammer 22 abgetrennt, wobei die Trennwand 25 und ein entsprechender Abschnitt des Bodenteils 20 die Teilkammer 24 umschließen. Bei geschlossenem ersten Deckel 30 ist die Teilkammer 24 geschlossen, so dass insbesondere das in der Teilkammer 24 angeordnete erste Schloss 31 geschützt angeordnet ist.

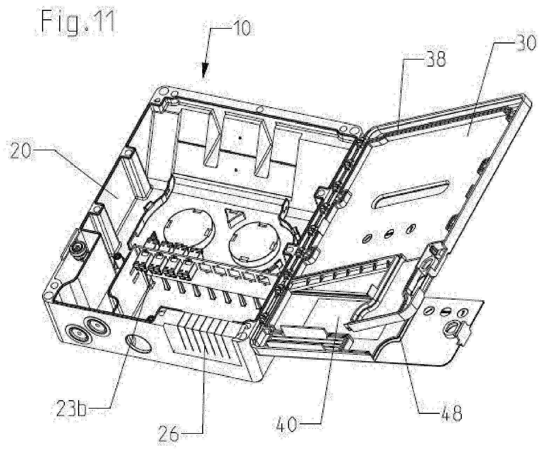

Zwischen dem ersten Deckel 30 und der in Richtung auf den ersten Deckel 30 weisenden offenen umlaufenden Kante der Wandung der ersten Kammer 21 kann eine erste Dichtung 38 angeordnet sein, um die erste Kammer 21 gegen den ersten Deckel 30 bei geschlossenem ersten Deckel 30 abzudichten (vgl. Fig. 11). Dabei kann die erste Dichtung 38 entweder an der umlaufenden Kante der Wandung der ersten Kammer 21 oder vorzugsweise an dem ersten Deckel 30 angeordnet sein. Die Dichtung 38 kann vollständig umlaufend ausgebildet sein, kann aber auch nur abschnittsweise ausgebildet sein. Beispielsweise kann die Trennwand 23 ausgespart sein. Durch einen Abschnitt dieser ersten Dichtung 38 wird bei dem vorliegenden Ausführungsbeispiel die erste Kammer 21 gegen die Teilkammer 24 abgedichtet.

Zwischen dem zweiten Deckel 40 und der in Richtung auf den zweiten Deckel 40 weisenden offenen umlaufenden Kante der Wandung der zweiten Kammer 22 kann eine zweite Dichtung 48 angeordnet sein, um die zweite Kammer 22 gegen den zweiten Deckel 40 bei geschlossenem zweiten Deckel 40 abzudichten. Dabei kann die zweite Dichtung 48 entweder an der umlaufenden Kante der Wandung der zweiten Kammer 22 oder vorzugsweise an dem zweiten Deckel 40 angeordnet sein (vgl. Fig. 11). Die Dichtung 48 kann vollständig umlaufend ausgebildet sein. Oberhalb der Trennwand 23 kann durch die Dichtung 48 eine Abdichtung zwischen dem ersten Deckel 30 und dem zweiten Deckel 40 erfolgen, indem die Dichtung 48 auf der Oberseite des ersten Deckels 30 aufliegt. In diesem Fall sind die erste Kammer 21 und die zweite Kammer 22 dann abgedichtet, wenn der erste Deckel 30 und der zweite Deckel 40 geschlossen sind. Die Teilkammer 24 ist dabei insbesondere von der Abdichtung ausgenommen.

Der zweite Deckel 40 kann mittels eines Rastverschlusses 41 in dem geschlossenen Zustand fixiert sein. Dazu kann an dem zweiten Deckel 40 eine Zunge 42 angeordnet sein, an deren freiem Ende ein Vorsprung 43 angeordnet ist, der eine Kante 33 rastend hintergreift. Die Kante 33 kann an dem Bodenteil 20 oder an dem ersten Deckel 30 angeordnet sein.

Es besteht alternativ oder zusätzlich die Möglichkeit, den zweite Deckel 40 mittels eines zweiten Schlosses 46 abschließbar auszubilden, wobei das zweite Schloss 46 vorzugsweise ebenfalls in der Teilkammer 24 angeordnet ist. Das zweite Schloss 46 kann an dem zweiten Deckel 40 fixiert sein und lediglich bei geschlossenem Deckel 40 in der Teilkammer 24 angeordnet sein. Alternativ kann das zweite Schloss 46 auch in der Teilkammer 24 fixiert angeordnet sein. Das zweite Schloss 46 ist durch eine Öffnung 46a im zweiten Deckel 40 zugänglich, um das zweite Schloss 46 beispielsweise mittels eines Schlüssels betätigen zu können. Das zweite Schloss 46 kann beispielsweise einen um eine Drehachse verschwenkbaren Riegel umfassen, der in einer ersten Position ein Verschlusselement hintergreift und den zweiten Deckel 40 in dem geschlossenen Zustand fixiert und der in einer zweiten Position ein Öffnen des zweiten Deckels 40 gegen das Bodenteil 20 erlaubt. Dabei können das erste Schloss 31 und das zweite Schloss 46 durch den gleichen Schlüssel öffenbar sein. Alternativ können das erste Schloss 31 und das zweite Schloss 46 durch unterschiedliche Schlüssel öffenbar sein.

Der erste Deckel 30 und der zweite Deckel 40 sind vorzugsweise abschnittsweise überlappend ausgebildet. Dazu kann der erste Deckel 30 einen ersten Abschnitt 35 und der zweite Deckel 40 einen zweiten Abschnitt 45 aufweisen, wobei bei geschlossenem ersten Deckel 30 und geschlossenem zweiten Deckel 40 der zweite Abschnitt 45 den ersten Abschnitt 35 überdeckt. Weist der erste Abschnitt 35 eine Fläche auf, welche kleiner ist als die Fläche des ersten Deckels 30, überdeckt der zweite Deckel 40 den ersten Deckel 30 nur abschnittsweise und nicht vollständig. Um eine plane Oberfläche des Wandverteilergehäuses 10 zu erhalten, kann der erste Abschnitt 35 des ersten Deckels 30 gegenüber dem verbleibenden Abschnitt des ersten Deckels 30 abgestuft mit einer geringeren Höhe ausgebildet sein und der zweite Abschnitt 45 des zweiten Deckels 40 gegenüber dem verbleibenden Abschnitt des zweiten Deckels 40 abgestuft mit einer geringeren Höhe ausgebildet sein.

Das erste Schloss 31 kann in dem ersten Abschnitt 35 des ersten Deckels 30 durch die erste Öffnung 31b zugänglich angeordnet sein, wird vorzugsweise aber durch den ersten Abschnitt 45 des zweiten Deckels 40 überdeckt (vgl. Ausführungsform in den Figuren 9 11). Ist ein zweites Schloss 46 für den zweiten Deckel 40 vorhanden, kann dies beispielsweise in dem zweiten Abschnitt 45 zugänglich angeordnet sein, wobei es zusätzlich in dem ersten Abschnitt 35 durch eine Öffnung 31b zugänglich angeordnet ist (vgl. Ausführungsform in den Figuren 1 bis 8). Der Rastverschluss 41 ist vorzugsweise zwischen dem ersten Abschnitt 35 und dem zweiten Abschnitt 45 ausgebildet. Dabei kann die an dem zweiten Deckel 40 angeordnete Zunge 42 in einer seitlichen Ausnehmung 32 an dem ersten Deckel 30 seitlich vorbeigeführt sein, wobei der Vorsprung 43 den ersten Deckel 30 hintergreift.

Der erste Deckel 30 und/oder der zweite Deckel 40 können schwenkbar an dem Bodenteil 20 angeordnet sein. Weiterhin können der erste Deckel 30 und/oder der zweite Deckel 40 lösbar an dem Bodenteil 20 angeordnet sein. Insbesondere können der erste Deckel 30 und/oder der zweite Deckel 40 mittels wenigstens einer Verbindungsvorrichtung 50 an dem Bodenteil 20 angeordnet sein, welche einen Quersteg 51 umfasst, der in zwei beabstandet zueinander angeordneten Halbschalen 52 rastend und um die eigene Längsachse drehbar gelagert angeordnet ist. Die Längsachse des Querstegs 51 bildet insbesondere die Schwenkachse. Der Quersteg 51 ist dabei mittels eines Befestigungsstegs 51a entweder an dem Bodenteil 20 oder an dem entsprechenden Deckel 30, 40 angeordnet, während die Halbschalen entweder an dem entsprechenden Deckel 30, 40 oder an dem Bodenteil 20 angeordnet sind. In dem dargestellten Ausführungsbeispiel ist der Quersteg 51 an dem Bodenteil 20 angeordnet, während die beiden Halbschalen 52 an dem entsprechenden Deckel 30, 40 angeordnet sind. Jeder der Deckel 30, 40 kann über mehrere Verbindungsvorrichtungen 50 an dem Bodenteil 20 schwenkbar angelenkt sein. Beispielsweise ist der erste Deckel 30 mittels sieben Verbindungsvorrichtungen 50 an dem Bodenteil 20 angeordnet, während der zweite Deckel 40 mittels zwei Verbindungsvorrichtungen 40 an dem Bodenteil 20 angeordnet ist.

Der erste Deckel 30 kann im Bereich einer Ecke ein zusätzliches Feststellelement 36 zum Verschließen des ersten Deckels 30 aufweisen, um ein Aufklaffen oder Aufklappen dieser Ecke nach Möglichkeit zu vermeiden. Das Feststellelement 36 kann beispielsweise derart ausgebildet sein, dass mittels einer Drehung um weniger als 360°, beispielsweise im Bereich von etwa 90° bis 180°, eine Art Schraube in ein entsprechendes Gewinde eingedreht oder ein Verschluss nach Art eines Bajonettverschlusses geschlossen wird, um ein Verschließen zu erreichen.

In einer Seitenwandung der zweiten Kammer 22 können Kabeldurchführungsöffnungen 26 angeordnet sein, welche mit einer Dichtung insbesondere aus Moosgummi 27 abgedichtet sein können.

Der erste Deckel 30 und/oder der zweite Deckel 40, im vorliegenden Ausführungsbeispiel der zweite Deckel 40, kann eine Anlagekante 37 zur Anlage eines Beschriftungselements aufweisen.

Das Wandverteilergehäuse 10 ist insbesondere als Spleißgehäuse zum Anschluss von Glasfaserkabeln und/oder Lichtwellenleitern und/oder Kupferleitungen ausgebildet, wobei die erste Kammer 21 als Spleißbereich und die zweite Kammer 22 als Patchbereich ausgebildet ist. Durch die Trennung von erster Kammer 21 und zweiter Kammer 22 kann eine Trennung des Installationsbereichs und des Anwenderbereichs ermöglicht werden, wobei durch die abschließbare erste Kammer 21 sichergestellt werden kann, dass keine unbefugten oder unsachgemäßen Änderungen an der Installation vorgenommen werden können.

Versorgungskabel, beispielsweise Glasfaserkabel oder Lichtwellenleiter oder Kupferleitungen, können durch Durchführungsöffnungen 28 in das Wandverteilergehäuse 10 hinein und/oder aus dem Wandverteilergehäuse 10 heraus geführt sein. Der Installateur nimmt in der ersten Kammer 21 die entsprechende Installation vor, beispielsweise, indem er ein Glasfaserkabel durch eine der Durchführungsöffnung 28 in die erste Kammer 21 hineinführt und dort im Spleißbereich anschließt, beispielsweise an Anschlusselemente 23b, welche insbesondere in den Einführöffnungen 23 in der Trennwand 23 angeordnet sind (vgl. Figur 11). Die Anschlusselemente 23b können beispielsweise als Anschlussbuchsen oder Kupplungen ausgebildet sein.

Der Anwender kann in der zweiten Kammer 22 durch die Einführöffnungen 23a in der Trennwand 23 Kabel einführen und anschließen, ohne jedoch Änderungen an in der ersten Kammer 21 angeordneten Komponenten vornehmen zu können. Insbesondere kann der Anwender die entsprechenden Kabel an die in den Einführöffnungen 23a in der Trennwand 23 angeordneten Anschlusselemente 23b anschließen. Die entsprechend angeschlossenen Kabel können durch die Kabeldurchführungsöffnungen 26 aus dem Wandverteilergehäuse 10 nach außen geführt werden, wobei nach Schließen des zweiten Deckels 40 der Anschlussbereich ebenfalls gegen Staub und Schmutz geschützt ist.

### Bezugszeichenliste

- 10: Wandverteilergehäuse
- 20: Bodenteil
- 21: erste Kammer
- 22: zweite Kammer
- 23: Trennwand
- 23a: Einführöffnung
- 23b: Anschlusselement
- 24: Teilkammer
- 25: Trennwand
- 26: Kabeldurchführungsöffnung
- 27: Moosgummi
- 28: Durchführungsöffnung
- 29: zweite Durchgangsöffnung
- 30: erster Deckel
- 31: erstes Schloss
- 31a: Öffnung
- 31b: Öffnung
- 31c: Riegel
- 31d: Verschlusselement
- 32: Ausnehmung
- 33: Kante
- 35: erster Abschnitt
- 36: Feststellelement
- 37: Anlagekante
- 38: erste Dichtung
- 39: erste Durchgangsöffnung
- 40: zweiter Deckel
- 41: Rastverschluss
- 42: Zunge
- 43: Vorsprung
- 45: zweiter Abschnitt
- 46: zweites Schloss
- 46a: Öffnung
- 48: zweite Dichtung
- 50: Verbindungsvorrichtung
- 51: Quersteg
- 51a: Befestigungssteg
- 52: Halbschale

## Patentansprüche

1. Wandverteilergehäuse (10) mit einem Bodenteil (20), welches wenigstens eine erste Kammer (21) insbesondere für Installationsanschlüsse und eine durch Einführöffnungen (23a) aufweisende Trennwand (23) von der ersten Kammer (21) getrennte zweite Kammer (22) insbesondere zum Einsetzen von Anschlusselementen aufweist, wobei ein erster Deckel (30) zumindest die erste Kammer (21) und ein zweiter Deckel (40) zumindest die zweite Kammer (22) überdeckt, wobei der erste Deckel (30) mittels eines ersten Schlosses (31) abschließbar ausgebildet ist,
**dadurch gekennzeichnet, dass** das erste Schloss (31) in einer in dem Bodenteil (20) angeordneten Teilkammer (24) angeordnet ist.

2. Wandverteilergehäuse nach Anspruch 1,
**dadurch gekennzeichnet, dass** die erste Kammer(21) und/oder die zweite Kammer (22) bei geschlossenem ersten Deckel (30) und geschlossenem zweiten Deckel (40) abgedichtet sind, insbesondere gegen die Teilkammer (24).

3. Wandverteilergehäuse nach einem der vorhergehenden Ansprüche,
**dadurch gekennzeichnet, dass** der zweite Deckel (40) mittels eines Rastverschlusses (41) in einem geschlossenen Zustand fixiert ist.

4. Wandverteilergehäuse nach einem der vorhergehenden Ansprüche,
**dadurch gekennzeichnet, dass** der zweite Deckel (40) mittels eines zweiten Schlosses abschließbar ausgebildet ist, wobei das zweite Schloss vorzugsweise in der Teilkammer (24) angeordnet ist.

5. Wandverteilergehäuse nach einem der vorhergehenden Ansprüche,
**dadurch gekennzeichnet, dass** der erste Deckel (30) einen ersten Abschnitt (35) und der zweite Deckel (40) einen zweiten Abschnitt (45) aufweisen, wobei das erste Schloss (31) in dem ersten Abschnitt (35) zugänglich angeordnet ist, wobei bei geschlossenem ersten Deckel (30) und geschlossenem zweiten Deckel (40) der zweite Abschnitt (45) den ersten Abschnitt (35) überdeckt.

6. Wandverteilergehäuse nach Anspruch 5,
**dadurch gekennzeichnet, dass** der erste Abschnitt (35) eine Fläche aufweist, welche kleiner ist als die Fläche des ersten Deckels (30).

7. Wandverteilergehäuse nach einem der Ansprüche 5 bis 6,
**dadurch gekennzeichnet, dass** der erste Abschnitt (35) des ersten Deckels (30) gegenüber dem verbleibenden Abschnitt des ersten Deckels (30) abgestuft mit einer geringeren Höhe und der zweite Abschnitt (45) des zweiten Deckels (40) gegenüber dem verbleibenden Abschnitt des zweiten Deckels (40) abgestuft mit einer geringeren Höhe ausgebildet ist.

8. Wandverteilergehäuse nach einem der vorhergehenden Ansprüche,
**dadurch gekennzeichnet, dass** der erste Deckel (30) und/oder der zweite Deckel (40) schwenkbar an dem Bodenteil (20) angeordnet sind.

9. Wandverteilergehäuse nach einem der vorhergehenden Ansprüche,
**dadurch gekennzeichnet, dass** der erste Deckel (30) und/oder der zweite Deckel (40) lösbar an dem Bodenteil (20) angeordnet sind.

10. Wandverteilergehäuse nach einem der vorhergehenden Ansprüche,
**dadurch gekennzeichnet, dass** der erste Deckel (30) und/oder der zweite Deckel (40) mittels wenigstens einer Verbindungsvorrichtung (50) an dem Bodenteil (20) angeordnet sind, welche einen Quersteg (51) umfasst, der in zwei beabstandet zueinander angeordneten Halbschalen (52) rastend und um die eigene Längsachse drehbar gelagert angeordnet ist.

11. Wandverteilergehäuse nach einem der vorhergehenden Ansprüche,
**dadurch gekennzeichnet, dass** der erste Deckel (30) im Bereich einer Ecke ein zusätzliches Feststellelement (36) zum Verschließen des ersten Deckels (30) aufweist.

12. Wandverteilergehäuse nach einem der vorhergehenden Ansprüche,
**dadurch gekennzeichnet, dass** der erste Deckel (30) eine erste Durchgangsöffnung (38) und das Bodenteil (20) eine zweite Durchgangsöffnung (29) zum Anbringen einer Verplombung aufweisen.

13. Wandverteilergehäuse nach einem der vorhergehenden Ansprüche,
**dadurch gekennzeichnet, dass** in einer Seitenwandung der zweiten Kammer (22) Kabeldurchführungsöffnungen (26) angeordnet sind, welche insbesondere mit einer Dichtung, vorzugsweise mit Moosgummi (27), abgedichtet sind.

14. Wandverteilergehäuse nach einem der vorhergehenden Ansprüche,
**dadurch gekennzeichnet, dass** der erste Deckel (30) und/oder der zweite Deckel (40) eine Anlagekante (37) zur Anlage eines Beschriftungselements aufweist.

15. Wandverteilergehäuse nach einem der vorhergehenden Ansprüche,
**dadurch gekennzeichnet, dass** das Wandverteilergehäuse (10) als Spleißgehäuse zum Anschluss von Glasfaserkabeln und/oder Lichtwellenleitern und/oder Kupferleitungen ausgebildet ist, wobei die erste Kammer (21) als Spleißbereich und die zweite Kammer (22) als Patchbereich ausgebildet ist.
